# EUROPEAN PATENT SPECIFICATION

(11) **EP 4 428 107 B1**
(45) Date of publication and mention of the grant of the patent: **15.10.2025**
(21) Application number: 22910196.9
(22) Date of filing: 23.12.2022
(51) Int. Cl.: C03C 3/087, C03C 4/10, B32B 17/10, B60J 1/00

(54) **GLASS, GLASS ASSEMBLY, AND VEHICLE**
GLAS, GLASANORDNUNG UND FAHRZEUG
VERRE, ENSEMBLE À BASE DE VERRE ET VÉHICULE

(30) Priority: 24.12.2021 CN 202111602659
(43) Date of publication of application: 11.09.2024
(73) Proprietor: Fuyao Glass Industry Group Co., Ltd., Fuqing, Fujian 350300 (CN)
(72) Inventor: SHANG, Guicai, Fuzhou, Fujian 350300 (CN); BU, Lingchun, Fuzhou, Fujian 350300 (CN); CHEN, Xinghao, Fuzhou, Fujian 350300 (CN); QI, Meimei, Fuzhou, Fujian 350300 (CN); KE, Cheng, Fuzhou, Fujian 350300 (CN)
(74) Representative: Mewburn Ellis LLP
(86) International application number: PCT/CN2022/141427
(87) International publication number: WO 2023/116886

(56) References cited:
- EP-A1- 3 825 742
- WO-A1-2019/030106
- CN-A- 1 784 363
- CN-A- 114 230 174
- JP-A- 2012 214 350
- JP-A- 2016 088 761
- US-A1- 2014 152 914

## Description

### TECHNICAL FIELD

The disclosure relates to the technical field of glasses, and specifically, to a glass, a glass assembly, and a vehicle.

### BACKGROUND

As the use of glass becomes increasingly widespread, users have increasing demands for the glass. For a light detection and ranging (LiDAR) mounted inside a vehicle, signals of the LiDAR need to pass through a vehicle glass for transmission. In order to ensure the normal operation of the LiDAR and meet the requirements of high-precision measurement, the vehicle glass needs to have a high transmittance for a signal with a wavelength of 905 nm or 1550 nm. A window glass used in the related art, designed to meet heat insulation requirements, has a high blocking rate for infrared light of 780 nm to 2500 nm, which cannot meet the operation requirements of the LiDAR. The documents EP 3 825 742 and WO 2019/030106 describe soda lime glass sheets for LiDAR.

### SUMMARY

In view of above, a first aspect of the disclosure provides a glass. The glass has oxide components including, in a content expressed in percentages by total mass of the glass: SiO₂ of 55% ~ 85%, Al₂O₃ of 0% ~ 10%, Na₂O of 5% ~ 20%, CaO of 5% ~ 20%, MgO of 0% ~ 10%, K₂O of 0% ~ 10%, BaO of 0% ~ 10%, Sb₂Oₓ of 0.4% ~ 0.6%, ZnO of 0.2% ~ 0.4%, TiO₂ of 0.3 % ~ 0.4%, and total iron expressed as Fe₂O₃ of less than 180 parts per million (ppm), where ZnO + TiO₂ + Fe₂O₃ ≤ Sb₂Oₓ, and 10 Fe₂O₃ + ZnO + TiO₂ ≥ Sb₂Oₓ.

According to the glass provided in the first aspect of the disclosure, a content of total iron expressed as Fe₂O₃ in components of the glass is controlled, and ZnO of a specific content, TiO₂ of a specific content, and Sb₂Oₓ of a specific content are added, so that an infrared transmittance of the glass may be improved. Specifically, the infrared transmittance of the glass may be improved by reducing the content of total iron expressed as Fe₂O₃. TiO₂ may suppress infrared absorption caused by oxygen and hydrogen in glass impurities, thereby further improving infrared transmittance. ZnO may improve a visible-light transmittance of the glass. Sb₂Oₓ may facilitate the removal of bubbles from the glass, thereby fining glass melts and maintaining the color consistency of ultra-clear glass.

SiO₂, as a basic component of the glass, may serve as a basis for the incorporation of other components. Al₂O₃ and MgO may improve the thermal stability of the glass, reduce the tendency to crystallize of the glass, and improve the chemical stability and mechanical strength of the glass. Na₂O, CaO, and K₂O serve as fluxes in the glass manufacturing, accelerating the melting and refining processes of the glass and improving the chemical stability of the glass. BaO has good fluxing properties and may improve the melting effect of the glass. These components may be used as main components of the glass, cooperate with each other to improve the overall performance of the glass, thereby improving the thermal stability of the glass and reducing the tendency to crystallize of the glass. In addition, the melting and refining processes of the glass may also be accelerated to improve the chemical stability of the glass. Therefore, the mutual cooperation of ZnO of a specific content, TiO₂ of a specific content, Sb₂Oₓ of a specific content, and total iron expressed as Fe₂O₃ of a specific content can be achieved to improve the infrared transmittance of the glass.

In addition, ZnO, TiO₂, Sb₂Oₓ, and total iron expressed as Fe₂O₃ provided in the disclosure may cooperate with each other. Specifically, both TiO₂ and Sb₂Oₓ may promote the oxidation of ferrous iron ions with strong coloring ability in the glass into ferric iron ions with poor coloring ability, thereby improving the color consistency of the glass and improving the quality of the glass. ZnO may also reduce the thermal expansion coefficient of the glass and improve the stability of the glass, thereby laying the foundation for the cooperation between TiO₂, Sb₂Oₓ, and total iron expressed as Fe₂O₃ and an improvement in the infrared transmittance of the glass.

In the disclosure, a SiO₂ content, a Al₂O₃ content, a Na₂O content, a CaO content, a MgO content, a K₂O content, and a BaO content are also specified, so that the cooperation effect between the components may be improved, the overall performance of the glass may be further improved, the thermal stability and chemical stability of the glass may be further improved, the melting and refining processes of the glass may be further accelerated, and the production costs may be reduced.

Furthermore, ZnO, TiO₂, Sb₂Oₓ, and total iron expressed as Fe₂O₃ provided in the disclosure satisfy the following: ZnO + TiO₂ + Fe₂O₃ ≤ Sb₂Oₓ; and 10 Fe₂O₃ + ZnO + TiO₂ ≥ Sb₂Oₓ. In other words, a sum of a mass of ZnO, a mass of TiO₂, and a mass of total iron expressed as Fe₂O₃ is less than or equal to a mass of Sb₂Oₓ, and a sum of ten times the mass of total iron expressed as Fe₂O₃, the mass of ZnO, and the mass of TiO₂ is greater than or equal to the mass of Sb₂Oₓ. In the case where ZnO, TiO₂, Sb₂Oₓ, and total iron expressed as Fe₂O₃ satisfy the above ranges, a desire effect of mutual cooperation can be achieved, thereby improving the infrared transmittance of the glass. If ZnO, TiO₂, Sb₂Oₓ, and total iron expressed as Fe₂O₃ exceed the above ranges, not only the infrared transmittance of the glass may be reduced, but also the costs may be increased, making the glass prone to crystallization and resulting in color inconsistency. If the ZnO, TiO₂, Sb₂Oₓ, and total iron expressed as Fe₂O₃ are below the above ranges, the infrared transmittance of the glass may also be reduced, and the stability of the glass may also be reduced, resulting in color inconsistency. Therefore, ZnO, TiO₂, and Sb₂Oₓ may also be regarded as modifiers, and modifiers of specific contents may be added to the glass containing total iron expressed as Fe₂O₃ of a specific content to improve the infrared transmittance of the glass. That is, by controlling mutual cooperation of ZnO of a specific content, TiO₂ of a specific content, Sb₂Oₓ of a specific content, and total iron expressed as Fe₂O₃ of a specific content, a high infrared transmittance of the glass can be achieved.

In view of above, in the disclosure, the glass may be adjusted by controlling the content of total iron expressed as Fe₂O₃ in the glass and adding ZnO of a specific content, TiO₂ of a specific content, and Sb₂Oₓ of a specific content, so that ZnO, TiO₂, Sb₂Oₓ, and total iron expressed as Fe₂O₃ may cooperate with each other to improve the infrared transmittance of the glass, thereby obtaining a glass having a high infrared transmittance.

In an embodiment, a mass of Sb₂Oₓ is less than or equal to three times a mass of ZnO.

In an embodiment, the mass of Sb₂Oₓ is less than or equal to twice a mass of TiO₂.

In an embodiment, the mass of Sb₂Oₓ is greater than twice a mass of ZnO. Additionally or alternatively, the mass of Sb₂Oₓ is greater than a mass of TiO₂.

In an embodiment, the glass has a transmittance of greater than or equal to 91% for infrared light with a wavelength ranging from 800 nm to 1580 nm.

A second aspect of the disclosure provides a glass assembly. The glass assembly includes two above-mentioned glasses and a thermoplastic interlayer sandwiched between the two glasses.

In the second aspect of the disclosure, the glass assembly is provided. With the aid of the glass provided in the first aspect, an infrared transmittance of the glass assembly can be improved. Furthermore, the thermoplastic interlayer is sandwiched between the two glasses. The thermoplastic interlayer may be customized according to the requirements of users, so that the glass assembly may have other functions, and thus the glass assembly may be applied to various fields. Therefore, the glass assembly may also further have other functions required by the users while having a high infrared transmittance, thereby improving the practicability of the glass assembly.

In an embodiment, the glass assembly has a transmittance of greater than or equal to 90% for infrared light with a wavelength ranging from 800 nm to 1580 nm.

In an embodiment, an infrared anti-reflective coating is provided at one side, away from the thermoplastic interlayer, of at least one of the two glasses.

In an embodiment, the glass assembly provided with the infrared anti-reflective coating has a transmittance of greater than or equal to 94% for infrared light with a wavelength ranging from 800 nm to 1580 nm.

In an embodiment, a thermal insulation coating is provided on one side, close to the thermoplastic interlayer, of at least one of the two glasses, and the thermal insulation coating is located outside a position of the glass where an orthographic projection of the infrared anti-reflective coating falls.

In an embodiment, a thickness of the infrared anti-reflective coating is greater than a thickness of the thermal insulation coating.

In an embodiment, one of the two glasses further includes at least one infrared anti-reflective coating stacked on at least one side of the glass.

In an embodiment, one of the two glasses further includes a protective coating disposed on a side face of the infrared anti-reflective coating away from the glass.

In an embodiment, the protective coating is an organic fluorine coating and has a thickness less than or equal to 10 nm and a refractive index of 1.39.

In an embodiment, the infrared anti-reflective coating is implemented as a single-layer infrared anti-reflective coating and has a refractive index less than a refractive index of the glass.

In an embodiment, the single-layer infrared anti-reflective coating has a refractive index of 1.3 ~ 1.8, and the single-layer infrared anti-reflective coating is made of at least one of aluminum oxide, silicon dioxide, silicon oxynitride, aluminum oxynitride, magnesium oxide, or alkaline earth metal fluorohalide.

In an embodiment, the infrared anti-reflective coating is implemented as multiple infrared anti-reflective coatings stacked with each other, each of the multiple infrared anti-reflective coatings includes a first infrared anti-reflective coating close to the glass and a second infrared anti-reflective coating away from the glass, wherein in each two adjacent infrared anti-reflective coatings, the first infrared anti-reflective coating of one of the two adjacent infrared anti-reflective coatings is in direct contact with the second infrared anti-reflective coating of the other of the two adjacent infrared anti-reflective coatings; and a refractive index of the first infrared anti-reflective coating is greater than a refractive index of the second infrared anti-reflective coating.

In an embodiment, the first infrared anti-reflective coating has a refractive index of 1.9 ~ 2.7 and the second infrared anti-reflective coating has a refractive index of 1.3 ~ 1.8.

In an embodiment, the first infrared anti-reflective coating is made of at least one of aluminum nitride, silicon nitride, titanium dioxide, zirconium dioxide, titanium nitride, niobium pentoxide, tantalum pentoxide, molybdenum oxide, or chromium oxide, and the second infrared anti-reflective coating is made of at least one of aluminum oxide, silicon dioxide, silicon oxynitride, aluminum oxynitride, magnesium oxide, or alkaline earth metal fluorohalide.

A third aspect of the disclosure provides a vehicle. The vehicle includes a light detection and ranging (LiDAR), and the glass assembly provided in the second aspect. The vehicle body and the glass assembly cooperatively define an interior space. The LiDAR is mounted in the interior space. The LiDAR is configured to emit a signal that is to pass through the glass assembly and/or receive a signal that has passed through the glass assembly. The two glasses include a first glass and a second glass. The second glass is closer to the interior space than the first glass, and a thickness of the first glass is greater than or equal to a thickness of the second glass

In third aspect of the disclosure, a vehicle is provided. With the aid of the glass assembly provided in the second aspect of the disclosure, a high infrared transmittance of the glass assembly may be achieved, thereby improving a transmittance for infrared light transmitted from the exterior of the vehicle to the interior of the vehicle. In addition, the second glass being closer to the interior space than the first glass may be understood as the first glass facing the exterior of the vehicle and the second glass facing the interior of the vehicle. That is, the first glass faces the exterior of the vehicle, and the second glass faces a cockpit. Therefore, the thickness of the first glass is greater than or equal to the thickness of the second glass. In other words, when the first glass is subject to external impacts, the thicker glass (i.e., the first glass) may improve the durability and impact resistance of the glass against the external impacts, thereby improving the durability and impact resistance of the glass assembly of the vehicle, and enhancing the safety of occupants inside the vehicle. Therefore, the glass assembly of the vehicle may enhance the safety of the vehicle while having high infrared transmittance.

### BRIEF DESCRIPTION OF THE DRAWINGS

To describe technical solutions in embodiments of the disclosure more clearly, the following briefly introduces the accompanying drawings required for describing the embodiments.
FIG. 1 is a side view of a glass according to an embodiment of the disclosure.
FIG. 2 is a side view of a glass according to another embodiment of the disclosure.
FIG. 3 is a side view of a glass according to another embodiment of the disclosure.
FIG. 4 is a side view of a glass according to another embodiment of the disclosure.
FIG. 5 is a side view of a glass according to another embodiment of the disclosure.
FIG. 6 is a side view of a glass according to another embodiment of the disclosure.
FIG. 7 is a front view of a glass according to another embodiment of the disclosure.
FIG. 8 is a schematic cross-sectional view of FIG. 7 according to another embodiment of the disclosure, taken along line A-A.
FIG. 9 is a side view of a glass according to another embodiment of the disclosure.
FIG. 10 is a side view of a glass assembly according to an embodiment of the disclosure.
FIG. 11 is a side view of a glass assembly according to another embodiment of the disclosure.
FIG. 12 is a side view of a glass assembly according to another embodiment of the disclosure.
FIG. 13 is a side view of a glass assembly according to another embodiment of the disclosure.
FIG. 14 is a partial side view of a glass assembly according to another embodiment of the disclosure.
FIG. 15 is a partial side view of a glass assembly according to another embodiment of the disclosure.
FIG. 16 is a side view of a glass assembly according to another embodiment of the disclosure.

Reference numbers are described as follows:
glass - 10, first region - 10a, second region - 10b, infrared anti-reflective coating - 20, first infrared anti-reflective coating - 201, second infrared anti-reflective coating - 202, third infrared anti-reflective coating - 203, glass assembly - 1, first glass - 11, first surface - 111, second surface - 112, second glass - 12, third surface - 121, fourth surface - 122, thermoplastic interlayer - 30, thermal insulation coating - 40, ink coating - 50, LiDAR - 70, and protective coating - 80.

### DETAILED DESCRIPTION

Prior to introducing the technical solutions of the disclosure, the technical problems in the related art are further introduced in detail below

In the related art, especially in the technical field of glass, as the use of the glass becomes increasingly widespread, users have increasing demands for the glass. For a light detection and ranging (LiDAR) mounted inside a vehicle, signals of the LiDAR need to pass through a vehicle glass for transmission. In order to ensure the normal operation of the LiDAR and meet the requirements of high-precision measurement, the vehicle glass needs to have a high transmittance for a signal with a wavelength of 905 nm or 1550 nm. A window glass used in the related art, designed to meet heat insulation requirements, has a high blocking rate for infrared light of 780 nm to 2500 nm, which cannot meet the operation requirements of the LiDAR.

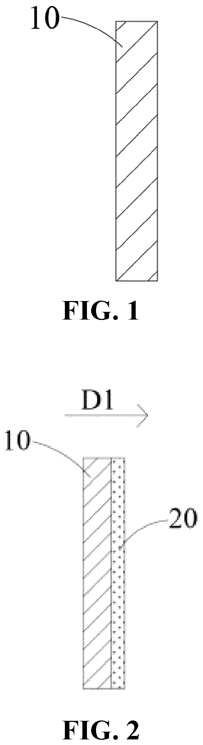

In order to solve the above problem, the disclosure provides a glass 10. Referring to table 1 and FIG. 1, table 1 is a table illustrating comparison of components of the glass according to an embodiment of the disclosure, and FIG 1 is a schematic structural diagram of the glass according to an embodiment of the disclosure

The glass 10 is provided in the embodiment. The glass 10 has oxide components including, in a content expressed in percentages by total mass of the glass 10:
SiO₂ of 55% ~ 85%,
Al₂O₃ of 0% ~ 10%,
Na₂O of 5% ~ 20%,
CaO of 5% ~ 20%,
MgO of 0% ~ 10%,
K₂O of 0% ~ 10%,
BaO of 0% ~ 10%,
Sb₂Oₓ of 0.4% ~ 0.6%,
ZnO of 0.2% ~ 0.4%,
TiO₂ of 0.3 % ~ 0.4%, and
total iron expressed as Fe₂O₃ of less than 180 parts per million (ppm);
where ZnO + TiO₂ + Fe₂O₃ ≤ Sb₂Oₓ, and 10 Fe₂O₃ + ZnO + TiO₂ ≥ Sb₂Oₓ. That is, a sum of a mass of ZnO, a mass of TiO₂, and a mass of total iron expressed as Fe₂O₃ is less than or equal to a mass of Sb₂Oₓ, and a sum of ten times the mass of total iron expressed as Fe₂O₃, the mass of ZnO, and the mass of TiO₂ is greater than or equal to the mass of Sb₂Oₓ.

Furthermore, the terms "comprise", "include", "have", and any variations thereof, are intended to cover non-exclusive inclusions.

The glass 10 provided in the embodiment may be used in the field of vehicles, and serves the functions of protection, observation, or cooperation with other components, and the shape structure of the glass 10 is not limited in the disclosure. Furthermore, the glass 10 provided in the embodiment may also be applied to various fields and structures, and the embodiment is only schematically illustrated by applying the glass 10 to a vehicle. However, this does not mean that the glass 10 of the embodiment must be applied to a vehicle, and in other embodiments, the glass 10 may also be applied to other structures, for example, the architectural field, the mechanical field, and the like.

For ease of understanding, the following first describes the types of light classified according to wavelengths. Light may be classified according to wavelengths into ultraviolet (UV) light, visible light, infrared light, and the like. The ultraviolet light has a wavelength of 10 nm ~ 400 nm, the visible light has a wavelength of 400 nm ~ 800 nm, and the infrared light has a wavelength of 800 nm ~ 500000 nm. In addition, the infrared light may also be classified into near-infrared light, middle-infrared light, and far-infrared light. The near-infrared light has a wavelength of 800 nm ~ 2500 nm. The middle-infrared light has a wavelength of 2500 nm ~ 25000 nm. The far-infrared light has a wavelength of 25000 nm ~ 500000 nm. The glass 10 provided in the embodiment is configured to improve a specific waveband transmittance, i.e., a transmittance for near-infrared light of 800 nm to 1580 nm. Optionally, in the embodiment, a transmittance of light may be measured through a Perkin Elmer Lambda 950 spectrophotometer.

The iron in the glass 10 provided in the embodiment is present in the form of ferrous ion Fe²⁺ (FeO) and ferric ion Fe³⁺ (Fe₂O₃). The presence of ferrous iron ions Fe²⁺ may cause the glass to have a relatively high absorption rate for near-infrared light, and the presence of ferric iron ions Fe³⁺ may cause the glass to have a relatively high absorption rate for short wavelength visible light and ultraviolet light. Therefore, a reduction in total iron content of ferrous ion Fe²⁺ and ferric ion Fe³⁺ may improve a visible-light transmittance and a near-infrared transmittance. According to standard practice in the glass field, the total iron content of ferrous iron ion Fe²⁺ and ferric iron ion Fe³⁺ is converted to total iron expressed by Fe₂O₃. An infrared transmittance of the glass 10 may be improved by reducing a content of total iron expressed as Fe₂O₃. A content of total iron expressed as Fe₂O₃ of a common clear glass is less than or equal to 1000 parts per million (ppm), and preferably, less than or equal to 800 ppm. In other words, a mass percentage of total iron expressed as Fe₂O₃ of the common clear glass is less than or equal to 0.1%, and preferably, less than or equal to 0.08%. Optionally, by adding ZnO of a specific content, TiO₂ of a specific content, and Sb₂Oₓ of a specific content, it may be achieved in the embodiment that a content of total iron expressed as Fe₂O₃ in the glass 10 is less than or equal to 180 ppm, i.e., a mass percentage of total iron expressed as Fe₂O₃ is less than or equal to 0.018%, thereby improving the visible-light transmittance and the infrared transmittance of the glass 10. In the embodiment, the content of total iron expressed as Fe₂O₃ is significantly lower than that of common glasses, and a lower content of total iron expressed as Fe₂O₃ results in a higher clarity of the glass, thereby satisfying the requirements of ultra-clear glass. However, in the case where the mass percentage of total iron expressed as Fe₂O₃ in glass is slightly higher than 180 ppm, the glass also belongs to ultra-clear glass, and has a relatively high visible-light transmittance, which may be understood as that the glass has a transmittance for the visible light (400 nm ~ 800 nm) of greater than or equal to 90%, but has a reduced transmittance for the near-infrared light (800 nm ~ 1580 nm), thereby reducing glass quality.

The glass 10 provided in the embodiment further contains ZnO. With the aid of ZnO, melting, fining, and formability of the glass 10 may be improved. Specifically, ZnO may reduce the thermal expansion coefficient of the glass 10, thereby improving the thermal stability and chemical stability of the glass 10, and reducing the devitrification and glass transition temperature of the glass 10. It may also be understood that ZnO may improve the structural stability of the glass 10, and reduce the risk of glass crystallization. Glass crystallization refers to that cracks occur on the surface of the glass 10 or even in the interior of the glass 10, thereby damaging the glass 10, reducing the visible-light transmittance of the glass 10, and reducing the service life of the glass. In addition, ZnO serves as an intermediate oxide in the glass and, under reducing conditions in the float bath, can be reduced to its elemental state to release oxygen. This facilitates the removal of bubbles in the mixture of glass melt, thereby fining the glass melt and promoting the oxidation of ferrous ion Fe²⁺ in the glass 10 to ferric ion Fe³⁺, reducing the redox ratio, and further improving the near-infrared transmittance of the glass 10. Therefore, ZnO of a specific content may not only improve the structural stability of the glass 10, but also improve the visible-light transmittance and the infrared transmittance of the glass 10.

The glass 10 provided in the embodiment further contains TiO₂. Titanium exists in the glass in two valence states: trivalent titanium ions and tetravalent titanium ions. The trivalent titanium ions may absorb light of 540 nm ~ 570 nm, thereby appearing red. The trivalent titanium ions together with ferrous ions can make the glass appear purple or yellow. The tetravalent titanium ions may absorb light of 300 nm ~ 370 nm, absorbing bands can enter the purple-blue spectrum of the visible light, thereby making the glass appear yellow. Moreover, the ultra-clear glass is very sensitive to ferrous ions. Due to the strong coloring ability of ferrous ions, the glass will appear green. Even if a relatively small content of ferrous ions will affect the coloring of the glass, especially the ultra-clear glass, thereby failing to satisfy the requirements of color consistency. Thus, the presence of TiO₂ may reduce a UV transmittance of the glass 10 and improve the color consistency of the glass. However, if the TiO₂ content is too high, the costs will be increased, the glass will be yellowish, and the visible-light transmittance of the glass will be reduced. On the other hand, if the TiO₂ content is too low, the color consistency of the glass will be affected (i.e., the effect of ferrous ions on the coloring of the glass will not be reduced or even eliminated), and the UV transmittance and the infrared transmittance of the glass 10 will be decreased.

The glass 10 provided in the embodiment further contains Sb₂Oₓ. Sb₂Oₓ may serve as a fining agent and an oxidant for iron during the production of the glass, so that the content of ferrous ions Fe²⁺ in total iron can be further reduced, thereby further improving the near-infrared transmittance of the glass 10. Specifically, Sb₂Oₓ includes Sb₂O₅ and Sb₂O₃. Sb₂Oₓ may promote the removal of bubbles from the glass 10, thereby improving the infrared transmittance of the glass 10. Specifically, antimony trioxide will be decomposed into antimony pentoxide under the action of sodium nitrate at 800°C to 900°C. As the temperature increases to 1500°C ~ 1600°C, antimony pentoxide will be decomposed into antimony trioxide and oxygen. The oxygen may promote the removal of bubbles in the mixture of the glass melt, thereby refining the glass melt. Sb₂Oₓ may also serve as a glass fining agent to eliminate bubbles in the glass 10, thereby obtaining the glass 10 with a uniform and stable structure, while making the structure of the glass 10 compact and enhancing the hardness of the glass 10. Furthermore, Sb₂Oₓ may also promote the oxidation of ferrous ions Fe²⁺ in the glass 10 to ferric ions Fe³⁺, thereby eliminating the effect of ferrous ions Fe²⁺ on the infrared transmittance. Therefore, Sb₂Oₓ may also be regarded as an oxidizer to improve the near-infrared transmittance of the glass 10. However, if the Sb₂Oₓ content is too high, not only the costs will increase, but also the structural stability of the glass 10 will be reduced, and the crystallization tendency will occur. If the Sb₂Oₓ content is too low, the near-infrared transmittance of the glass 10 will be reduced.

In addition, SiO₂, as a basic component of the glass 10, may serve as a basis for the incorporation of other components, and may also increase the viscosity of the glass melt, reduce the crystallization tendency of the glass 10, and improve the chemical stability and thermal stability of the glass 10.

Al₂O₃ may enter a silicon-oxygen network in the glass 10, bridging broken networks and tightening the structure of the glass 10. This reduces the crystallization tendency and speed of the glass 10 and reduces the expansion coefficient of the glass 10, thereby improving the thermal stability, the chemical stability, and mechanical strength of the glass 10.

MgO may also improve the thermal stability of the glass 10, reduce the crystallization tendency of the glass 10, and improve the chemical stability and mechanical strength of the glass 10.

Na₂O may serve as a flux for manufacturing the glass 10, which may reduce the viscosity of the glass melt, and accelerate the melting and refining processes of the glass 10. However, if Na₂O content is too high, the chemical stability, thermal stability, and mechanical strength of the glass 10 will be reduced, the glass 10 will tend to mildew, and the production cost of the glass 10 will be increased.

CaO may also accelerate the melting and fining processes of the glass 10 and improve the chemical stability of the glass 10.

K₂O is also a flux for manufacturing the glass 10, which may accelerate the melting and refining processes of the glass 10 and improve the chemical stability of the glass 10, and may also reduce the crystallization tendency of the glass 10 and improve the gloss performance of the glass 10.

BaO has a good fluxing property, thereby improving the melting of the glass 10.

SiO₂, Al₂O₃, Na₂O, CaO, MgO, K₂O, and BaO in the glass 10 in the embodiment may serve as basic components of the glass 10, and cooperate with each other to form the glass 10, thereby improving the overall performance of the glass 10, and not only improving the thermal stability of the glass 10, but also reducing the crystallization tendency of the glass 10. In addition, the melting and refining processes of the glass 10 may be accelerated to improve the chemical stability of the glass 10, thereby serving as a basis for improving the infrared transmittance of the glass 10 through the mutual cooperation of ZnO of a specific content, TiO₂ of a specific content, Sb₂Oₓ of a specific content, and total iron expressed as Fe₂O₃ of a specific content.

The embodiment further defines the contents of SiO₂, Al₂O₃, Na₂O, CaO, MgO, K₂O, and BaO, so that the cooperation effect among the components may be better, the overall performance of the glass 10 can be further improved, the thermal stability and chemical stability of the glass 10 can be further improved, the melting and refining processes of the glass 10 can be further accelerated, and the production costs can be reduced.

Referring to table 1, the data in table 1 represents the mass percentages of various components. It may be further noted that multiple examples illustrated in table 1 focus on the effects of adjustment, in a mass of ZnO, a mass of TiO₂, a mass of Sb₂Oₓ, and a mass of total iron expressed as Fe₂O₃, on the infrared transmittance, without taking adjustment of masses of the rest components of the glass into consideration. In the glass 10 of the embodiment, the infrared transmittance of the glass 10 may be improved by controlling the content of total iron expressed as Fe₂O₃ in the components of the glass 10 and adding ZnO of a specific content, TiO₂ of a specific content, and Sb₂Oₓ of a specific content. Specifically, a relatively low content of total iron expressed as Fe₂O₃ may improve the infrared transmittance. TiO₂ may inhibit infrared absorption caused by oxygen and hydrogen in impurities of glass 10, thereby further improving the infrared transmittance. ZnO may improve the visible-light transmittance of the glass 10. Sb₂Oₓ may improve the visible-light transmittance of the glass 10 by promoting the removal of bubbles from the glass 10. In addition, ZnO, TiO₂, Sb₂Oₓ, and total iron expressed as Fe₂O₃ may cooperate with each other. Specifically, both TiO₂ and Sb₂Oₓ may accelerate oxidation of ferrous ions with strong coloring ability in the glass 10 into ferric ions with poor coloring ability, so that the color consistency of the glass can be improved, thereby improving the glass quality. TiO₂ and Sb₂Oₓ may also be regarded as oxidants. By oxidizing ferrous iron ions into ferric iron ions, the extent to which the glass is colored by ferrous iron ions can be reduced, improving the transparency and the color consistency of the glass. ZnO may also reduce the thermal expansion coefficient of the glass, improve the stability of the glass, and lay the foundation for achieving the cooperation between TiO₂, Sb₂Oₓ, and total iron expressed as Fe₂O₃. ZnO may also be regarded as a stabilizer of the glass structure, which not only ensures mutual cooperation between TiO₂, Sb₂Oₓ, and total iron expressed as Fe₂O₃, improves the infrared transmittance, but also improves the stability of the glass structure and reduces the probability of crystallization of the glass.

**Table 1**

| | compar ative example 1 | compar ative example 2 | compar ative example 3 | embodim ent 1 | embodime nt 2 | embodime nt 3 | embodime nt 4 | embodime nt 5 | embodime nt 6 |
|---|---|---|---|---|---|---|---|---|---|
| SiO₂(%) | 73.71 | 73.174 | 72.666 | 73.73 | 73.15 | 72.25 | 70.338 | 70.546 | 69.24 |
| Al₂O₃ (%) | 0.015 | 0.018 | 0.01 | 0.015 | 0.02 | 0.01 | 0.02 | 0.015 | 0.45 |
| Na₂O (%) | 10.12 | 10.47 | 10.32 | 10.21 | 10.37 | 10.5 | 10.1 | 13.21 | 11.11 |
| CaO (%) | 8.71 | 8.65 | 8.55 | 8.77 | 8.65 | 8.71 | 8.33 | 7.63 | 9.62 |
| MgO (%) | 0.03 | 0.025 | 0.03 | 0.03 | 0.025 | 0.03 | 0.03 | 0.025 | 0.03 |
| K₂O (%) | 4.51 | 5.09 | 5.45 | 4.51 | 5.06 | 5.44 | 7.01 | 4.97 | 5.49 |
| BaO (%) | 1.85 | 1.73 | 1.93 | 1.68 | 1.58 | 1.91 | 3.11 | 2.5 | 2.89 |
| Fe₂O₃ (%) | 0.015 | 0.01 | 0.012 | 0.015 | 0.01 | 0.01 | 0.011 | 0.017 | 0.01 |
| Sb₂Oₓ (%) | 0.35 | 0.19 | 0.28 | 0.55 | 0.58 | 0.6 | 0.57 | 0.56 | 0.59 |
| ZnO (%) | 0.53 | 0.48 | 0.62 | 0.2 | 0.22 | 0.26 | 0.22 | 0.21 | 0.27 |
| TiO₂(%) | 0.26 | 0.18 | 0.15 | 0.3 | 0.35 | 0.3 | 0.32 | 0.33 | 0.31 |
| T₍₄₀₀₋₈₀₀₎ ≥ 90% | not qualifie d | not qualifie d | not qualifie d | qualified | qualified | qualified | qualified | qualified | qualified |
| T₍₈₀₀₋₁₅₈₀₎ ≥ 91% | not qualifie d | not qualifie d | not qualifie d | qualified | qualified | qualified | qualified | qualified | qualified |

Furthermore, ZnO, TiO₂, Sb₂Oₓ, and total iron expressed as Fe₂O₃ provided in the disclosure all satisfy the following: ZnO + TiO₂ + Fe₂O₃ ≤ Sb₂Oₓ, and 10 Fe₂O₃ + ZnO + TiO₂ ≥ Sb₂Oₓ. In other words, a sum of the mass of ZnO, the mass of TiO₂, and the mass of total iron expressed as Fe₂O₃ is less than or equal to the mass of Sb₂Oₓ, and a sum of ten times the mass of total iron expressed as Fe₂O₃, the mass of ZnO, and the mass of TiO₂ is greater than or equal to the mass of Sb₂Oₓ. In the case where ZnO, TiO₂, Sb₂Oₓ, and total iron expressed as Fe₂O₃ satisfy the above ranges, a desire effect of mutual cooperation can be achieved, thereby improving the infrared transmittance of the glass. If ZnO, TiO₂, Sb₂Oₓ, and total iron expressed as Fe₂O₃ exceed the above ranges, not only the infrared transmittance of the glass may be reduced, but also the costs may be increased, making the glass prone to crystallization and resulting in color inconsistency. If the ZnO, TiO₂, Sb₂Oₓ, and total iron expressed as Fe₂O₃ are below the above ranges, the infrared transmittance of the glass may also be reduced, and the stability of the glass 10 may also be reduced, resulting in color inconsistency. Therefore, ZnO, TiO₂, and Sb₂Oₓ may also be regarded as modifiers, and modifiers of specific contents may be added to the glass 10 containing total iron expressed as Fe₂O₃ of a specific content to improve the infrared transmittance. That is, by controlling mutual cooperation of ZnO of a specific content, TiO₂ of a specific content, Sb₂Oₓ of a specific content, and total iron expressed as Fe₂O₃ of a specific content, a high infrared transmittance of the glass 10 can be achieved.

Therefore, the glass 10 can be adjusted by controlling the content of total iron expressed as Fe₂O₃ in the glass 10 and adding ZnO of a specific content, TiO₂ of a specific content, and Sb₂Oₓ of a specific content, so that mutual cooperation of ZnO, TiO₂, Sb₂Oₓ, and total iron expressed as Fe₂O₃ can be achieved, thereby improving the infrared transmittance of the glass 10, and obtaining a high infrared transmittance of the glass 10.

Referring to table 1, the data in table 1 represents the mass percentages of various components. In the embodiment, a mass percentage of each of ZnO, TiO₂, Sb₂Oₓ, and total iron expressed as Fe₂O₃ in the glass 10 will be described in detail as follows. The mass percentage of ZnO ranges from 0.2% to 0.4%. The mass percentage of TiO₂ ranges from 0.3% to 0.4%. The mass percentage of Sb₂Oₓ ranges from 0.4% to 0.6%. The mass percentage of total iron expressed as Fe₂O₃ is less than or equal to 0.018%.

As illustrated in table 1, in the embodiment, ZnO of a specific mass, TiO₂ of a specific mass, Sb₂Oₓ of a specific mass, and total iron expressed as Fe₂O₃ of a specific mass may be added to cooperate with each other, and then whether the glass 10 satisfies the requirements is determined according to a transmittance of the glass 100 measured by the Perkin Elmer Lambda 950 spectrophotometer. The transmittance of the glass 100 is required to meet the following expressions: T₍₄₀₀₋₈₀₀₎ ≥ 90%, and T₍₈₀₀₋₁₅₈₀₎ ≥ 91%, where T₍₄₀₀₋₈₀₀₎ represents a transmittance of the glass 10 for visible light of 400 nm ~ 800 nm, and T₍₈₀₀₋₁₅₈₀₎ represents a transmittance of the glass 10 for near-infrared light of 800 nm ~ 1580 nm. The effects and mutual cooperation of ZnO, TiO₂, Sb₂Oₓ, and total iron expressed as Fe₂O₃ have been described in detail above, and will not be repeated herein. In the case where the mass percentage of ZnO in the glass 10 ranges from 0.2% to 0.4%, the mass percentage of TiO₂ in the glass 10 ranges from 0.3% to 0.4%, and the mass percentage of Sb₂Oₓ in the glass 10 ranges from 0.4% to 0.6%, and the mass percentage of total iron expressed ad Fe₂O₃ in the glass 10 is less than or equal to 0.018%, as illustrated in embodiments 1, 2, 3, 4, 5, and 6 in table 1, the glass 10 in each of embodiments 1, 2, 3, 4, 5, and 6 in table 1 satisfies the expressions: T₍₄₀₀₋₈₀₀₎ ≥ 90%, and T₍₈₀₀₋₁₅₈₀₎ ≥ 91%. In this case, by defining a content of ZnO, a content of TiO₂, a content of Sb₂Oₓ, and a content of total iron expressed as Fe₂O₃, the effects of mutual cooperation of ZnO, TiO₂, Sb₂Oₓ, and total iron expressed as Fe₂O₃ may be optimized, thereby further improving the infrared transmittance, and ensuring that the visible-light transmittance of the glass 10 may meet the production requirements (specifically, the production requirements of the ultra-clear glass). In the case where the mass percentage of TiO₂ in the glass is less than or equal to 0.3%, the mass percentage of Sb₂Oₓ is less than or equal to 0.4%, the mass percentage of ZnO is greater than or equal to 0.4%, and the mass percentage of total iron expressed as Fe₂O₃ is less than or equal to 0.018%, as illustrated in comparative examples 1, 2 and 3 in table 1, since the masses of Sb₂Oₓ and TiO₂ added in the glass 10 are low, the coloring effect of the ferrous iron ions cannot be eliminated; at the same time, since the content of ZnO is too high, the glass 10 is prone to crystallization, thereby reducing the transmittance of the glass 10, and thus the glass 10 in each of comparative examples 1, 2 and 3 in table 1 fails to satisfy the expressions: T₍₄₀₀₋₈₀₀₎ ≥ 90%, and T₍₈₀₀₋₁₅₈₀₎ ≥ 91%.

Therefore, in the case where a content of ZnO, a content of TiO₂, a content of Sb₂Oₓ, and a content of total iron expressed as Fe₂O₃ satisfy the following conditions: the mass percentage of ZnO is 0.2% ~ 0.4%, the mass percentage of TiO₂ is 0.3% ~ 0.4%, the mass percentage of Sb₂Oₓ is 0.4% ~ 0.6%, and the mass percentage of total iron expressed as Fe₂O₃ is less than or equal to 0.018%, it is possible to obtain the glass 10 that satisfies the expressions: T₍₄₀₀₋₈₀₀₎ ≥ 90%, and T₍₈₀₀₋₁₅₈₀₎ ≥ 91%, thereby further improving the infrared transmittance of the glass 10 and ensuring that the visible-light transmittance of the glass 10 may meet the production requirements. If one or more of ZnO, TiO₂, Sb₂Oₓ, and total iron expressed as Fe₂O₃ exceeds or falls below a specific range, not only the infrared transmittance will be reduced, but also the color of the glass will tend to be inconsistent, and the glass will be prone to crystallization, thereby reducing the transmittance of the glass. It may be understood that in the glass 10 that contains ZnO of a specific content, TiO₂ of a specific content, Sb₂Oₓ of a specific content, and total iron expressed as Fe₂O₃ of a specific content, since the content of ZnO, the content of TiO₂, the content of Sb₂Oₓ, and the content of total iron expressed as Fe₂O₃ are in a mutually balanced state, they may cooperate with each other to achieve a desired effect, thereby improving the infrared transmittance of the glass 10, enhancing the structural stability of the glass 10, reducing the content to which the glass 10 is colored, and improving the color consistency of the glass 10.

Referring again to table 1, in the embodiment, the mass of Sb₂Oₓ is less than or equal to three times the mass of ZnO. Preferably, the mass of Sb₂Oₓ is greater than the mass of ZnO. Specifically, the mass of Sb₂Oₓ is greater than twice the mass of ZnO.

In the case where Sb₂Oₓ and ZnO in the glass 10 satisfy the condition that the mass of Sb₂Oₓ is less than or equal to three times the mass of ZnO, cooperation between Sb₂Oₓ and ZnO may be enhanced, thereby not only sufficiently removing bubbles from the glass 10, improving the visible-light transmittance, but also enhancing the structural stability of the glass 10, reducing the risk of crystallization of the glass 10, and further improving the infrared transmittance of the glass 10.

Referring again to table 1, in the embodiment, the mass of Sb₂Oₓ is less than or equal to twice the mass of TiO₂. Preferably, the mass of Sb₂Oₓ is greater than the mass of TiO₂.

In the case where Sb₂Oₓ and TiO₂ in the glass 10 satisfy that the mass of Sb₂Oₓ is less than or equal to twice the mass of TiO₂, cooperation between Sb₂Oₓ and TiO₂ may be enhanced, so that ferrous iron ions with strong coloring ability in the glass can be oxidized into ferric iron ions with poor coloring ability, and thus the effect of the ferrous iron ions on the coloring of the glass may be eliminated, thererby not only improving the color consistency of the glass, but also improving the infraredt transmittance of the glass.

Referring again to table 1, in the embodiment, the glass has a transmittance of greater than or equal to 91% for infrared light with a wavelength ranging from 800 nm to 1580 nm.

As may be seen from table 1, by controlling the content of total iron expressed by Fe₂O₃ in the glass 10 and adding ZnO of a specific content, TiO₂ of a specific content, and Sb₂Oₓ of a specific content to adjust the glass 10, ZnO, TiO₂, Sb₂Oₓ, and the total iron expressed as Fe₂O₃ may cooperate with each other to improve the infrared transmittance of the glass 10, thereby enabling the glass 10 to have a transmittance of greater than or equal to 91% for infrared light with a wavelength of 800 nm ~ 1580 nm.

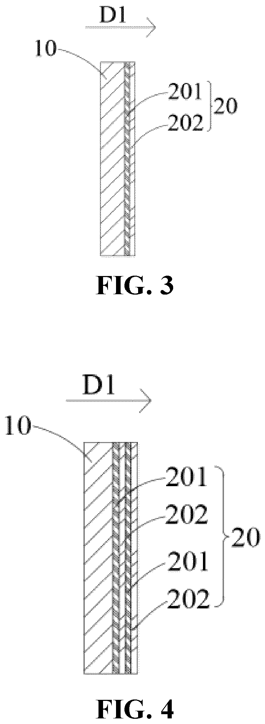

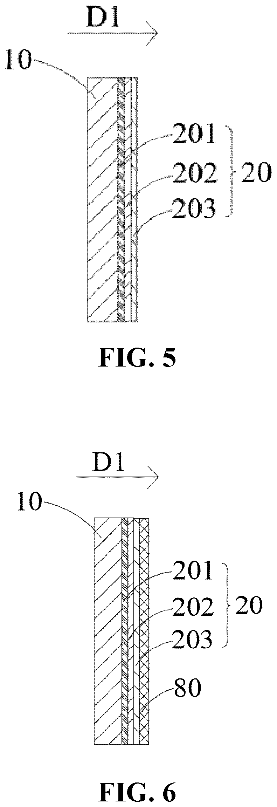

Referring to FIGS. 2 to 6, FIG. 2 is a side view of the glass 10 according to another embodiment of the disclosure, FIG. 3 is a side view of the glass 10 according to another embodiment of the disclosure, FIG. 4 is a side view of the glass 10 according to another embodiment of the disclosure, FIG. 5 is a side view of the glass 10 according to another embodiment of the disclosure, and FIG. 6 is a side view of the glass 10 according to another embodiment of the disclosure. The infrared anti-reflective coating 20 of the glass 10 will be elaborated hereinafter.

At least one infrared anti-reflective coating 20 is further provided to be stacked on at least one side of the glass 10. A refractive index of the material of the infrared anti-reflective coating 20 of the disclosure is different from a refractive index of the glass 10, and thus light can pass through the glass 10 and at least one infrared anti-reflective coating 20 that are different from each other in refractive index, thereby improving the visible-light transmittance and the infrared transmittance of the glass 10. Optionally, the visible-light transmittance and infrared transmittance may be further improved by designing different materials of coatings, different thicknesses of coatings, and different sequences of stacking of coatings that are made of different materials.

The shape and structure of the infrared anti-reflective coating 20 are not limited in the disclosure, as long as it may be used to improve a light transmittance. Alternatively, in the case where the glass 10 of the embodiment is applied to a vehicle, the infrared anti-reflective coating 20 may be disposed on one side of the glass 10 facing the interior of the vehicle, that is, the infrared anti-reflective coating 20 is disposed away from one side of the glass 10 in contact with the exterior, so that not only the light transmittance of the glass 10 can be improved, but also the infrared anti-reflective coating 20 can be protected from external impacts, thereby prolonging the service life of the infrared anti-reflective coating 20. In practical production, the glass 10 may be integrally formed with the infrared anti-reflective coating 20, or alternatively, the glass 10 and the infrared anti-reflective coating 20 may be separately independent structural members and be assembled together. Alternatively, a horizontal or vertical vacuum magnetron sputtering coating device may be used to prepare the infrared anti-reflective coating 20.

In an embodiment, referring to FIG. 2, the glass 10 includes a single-layer infrared anti-reflective coating 20 disposed on one side of the glass 10. A refractive index of the infrared anti-reflective coating 20 is less than a refractive index of the glass 10.

The single-layer infrared anti-reflective coating 20 may be made of a material that has a low refractive index of 1.3 ~ 1.8, where the material may be at least one of aluminum oxide (Al₂O₃), silicon dioxide (SiO₂, having a refractive index of 1.46), silicon oxynitride (SiON), aluminum oxynitride (AlON), magnesium oxide (MgO), or alkaline earth metal fluorohalide (MFx).

As illustrated in FIG. 2, when light is irradiated towards the glass 10 (i.e., in direction D1 illustrated in FIG. 2), the light will first pass through the glass 10, and then pass through the infrared anti-reflective coating 20 disposed at one side of the glass 10. Since the infrared anti-reflective coating 20 has a low refractive index, the light transmittance can be improved. The infrared anti-reflective coating 20 may also be regarded as a component for improving light transmittance. Therefore, the infrared anti-reflective coating 20 with a low refractive index may be added to further improve the infrared transmittance of the glass 10.

In another embodiment, the infrared anti-reflective coating 20 is implemented as multiple infrared anti-reflective coatings 20. Each of the multiple infrared anti-reflective coatings 20 includes a first infrared anti-reflective coating 201 close to the glass 10 and a second infrared anti-reflective coating 202 away from the glass 10. In each two adjacent infrared anti-reflective coatings 20, the first infrared anti-reflective coating 201 of one of the two adjacent infrared anti-reflective coatings 20 is in direct contact with the second infrared anti-reflective coating 202 of the other of the two adjacent infrared anti-reflective coating 20. A refractive index of the first infrared anti-reflective layer 201 is greater than a refractive index of the second infrared anti-reflective layer 202. That is, the multiple infrared anti-reflective coatings may be regarded as a composite laminated infrared anti-reflective coating that is formed by alternatively stacking multiple layers that are individually made of a high refractive index material and a low refractive index material.

The second infrared anti-reflective coating 202 may be made of a low refractive index material that has a refractive index of 1.3 ~ 1. 8, where the material may be at least one of aluminum oxide (Al₂O₃), silicon dioxide (SiO₂, having a refractive index of 1.46), silicon oxynitride (SiON), aluminum oxynitride (AlON), magnesium oxide (MgO), and alkaline earth metal fluorohalide (MFx). The first infrared anti-reflective coating 201 may be made of a high refractive index material that has a refractive index of 1.9 ~ 2.7, and the material may be at least one of aluminum nitride (AlN), silicon nitride (Si₃N₄, having a refractive index of 2.0), titanium dioxide (TiO₂), zirconium dioxide (ZrO₂), titanium nitride (TiNₓ), niobium pentoxide (Nb₂O₅), tantalum pentoxide (Ta₂O₅, having a refractive index of 2.1), molybdenum oxide (MoOₓ), or chromium oxide (CrOₓ). It may be understood that, the disclosure is not limited to the materials listed above, and other materials capable of reducing infrared reflectivity may also be utilized.

The infrared anti-reflective coating 20 includes multiple first infrared anti-reflective coatings 201 and multiple second infrared anti-reflective coatings 202. In other words, in the case where the infrared anti-reflective coating 20 is implemented as multiple infrared anti-reflective coatings, the multiple first infrared anti-reflective coatings 201 and the multiple second infrared anti-reflective coatings 202 are alternatively arranged in an order of refractive index, thereby reducing a reflectivity for optical signals and improving a transmittance of the glass 10 for optical signals. In a direction from a position close to a surface of the glass 10 to a position away from the surface of the glass 10, the first infrared anti-reflective coating 201, the second infrared anti-reflective coating 202 . . . are stacked in sequence. That is, in the direction from a position close to the surface of the glass 10 to a position away from the surface of the glass 10, refractive indexes of the multiple infrared anti-reflective coatings 20 are arranged in a sequence of high, low, high, low, . . . It may be noted that, in each of the multiple infrared anti-reflective coatings 20, the refractive index of the first infrared anti-reflective coating 201 is ensured to be greater than the refractive index of the second infrared anti-reflective coating 202.

In an embodiment, the infrared anti-reflective coating 20 may be implemented as a dual-layer infrared anti-reflective coating 20, a four-layer infrared anti-reflective coating 20, a six-layer infrared anti-reflective coating 20, or multi-layer infrared anti-reflective coating 20 more than six-layer. Optionally, in one embodiment, as illustrated in FIG. 3, in the case where the infrared anti-reflective coating 20 is implemented as a dual-layer infrared anti-reflective coating 20, in a direction from a position close to the surface of the glass 10 to a position away from the surface of the glass 10 (i.e., direction D1 illustrated in FIG. 3), the first infrared anti-reflective coating 201 and the second infrared anti-reflective coating 202 are stacked in sequence, where the first infrared anti-reflective coating 201 is closer to the glass 10 than the second infrared anti-reflective layer 202, and refractive indexes of the first infrared anti-reflective layer 201 and the second infrared anti-reflective layer 202 are arranged in a sequence of high and low (that is, the refractive index of the first infrared anti-reflective layer 201 is greater than the refractive index of the second infrared anti-reflective layer 202). Further, optionally, in another embodiment, as illustrated in FIG. 4, in the case where the infrared anti-reflective coating 20 is implemented as a four-layer infrared anti-reflective coating 20, in a direction from a position close to the surface of the glass 10 to a position away from the surface of the glass 10 (i.e., direction D1 illustrated in FIG. 4), one first infrared anti-reflective coating 201, one second infrared anti-reflective coating 202, another first infrared anti-reflective coating 201, and another second infrared anti-reflective coating 202 are ranged in sequence, the one first infrared anti-reflective coating 201 is disposed at a side close to the glass 10, and refractive indexes of the one first infrared anti-reflective coating 201, the one second infrared anti-reflective coating 202, the another first infrared anti-reflective coating 201, and the another second infrared anti-reflective coating 202 are arranged in a sequence of high/low/high/low. In the case where the glass 10 is implemented as a multi-layer infrared anti-reflective coating 20 more than four-layer, in the direction from a position close to the surface of the glass 10 to a position away from the surface of the glass 10, refractive indexes of the multi-layer infrared anti-reflective layers 20 are arranged in a sequence of high/low/ . . . /high/low.

In an embodiment, the infrared anti-reflective coating 20 may be implemented as a triple-layer infrared anti-reflective coating 20, a five-layer infrared anti-reflective coating 20, a seven-layer infrared anti-reflective coating 20, or multi-layer infrared anti-reflective coating 20 more than seven-layer. Optionally, in one embodiment, as illustrated in FIG. 5, in the case where the infrared anti-reflective coating 20 is implemented as a triple-layer infrared anti-reflective coating 20, in a direction from a position close to the surface of the glass 10 to a position away from the surface of the glass 10 (i.e., direction D1 illustrated in FIG. 5), the first infrared anti-reflective coating 201, the second infrared anti-reflective coating 202, and a third infrared anti-reflective coating 203 are arranged in sequence, and the first infrared anti-reflective coating 201 is disposed at a side close to the glass 10. Further, optionally, in the direction from a position close to the surface of the glass 10 to a position away from the surface of the glass 10 (i.e., direction D1 illustrated in FIG. 5), refractive indexes of the first infrared anti-reflective coating 201, the second infrared anti-reflective coating 202, and the third infrared anti-reflective coating 203 are arranged in a sequence of high/medium/low or in a sequence of medium/high/low.

A protective coating 80 is further provided to be disposed on a side face of the infrared anti-reflective coating 20 away from the glass 10. As illustrated in FIG. 6, in a direction from a position close to the surface of the glass 10 to a position away from the surface of the glass 10 (i.e., direction D1 illustrated in FIG. 6), the first infrared anti-reflective coating 201, the second infrared anti-reflective coating 202, the third infrared anti-reflective coating 203, and the protective coating 80 are arranged in sequence. In comparison with the glass 10 illustrated in FIG. 5, the glass 10 illustrated in FIG. 6 is further provided with the protective coating 80. The protective coating 80 is configured to protect the glass 10 and the infrared anti-reflective coating 20, thereby prolonging the service life of the glass 10 and the infrared anti-reflective coating 20. The material and shape of the protective coating 80 are not limited in the embodiment.

In one embodiment, the protective coating 80 is an organic fluorine coating and has a thickness less than or equal to 10 nm and a refractive index of 1.39. The organic fluorine has a relatively low refractive index, so that the glass 10 has the functions of water-repellent, anti-pollution, and anti-fingerprint, thereby prolonging the service life of the glass 10.

It may be noted that terms such as "first" and "second" in the description, claims, and drawings of the disclosure are used for distinguishing different objects, rather than for describing a specific sequence.

Optionally, ingredients included in the organic fluorine are introduced in detail below. The organic fluorine contains perfluorosilanes substituted with at least one of haloalkyl, alkyl, alkoxy, or ester groups, and one or more long-chain compounds with perfluoropolyether groups. Alternatively, the organic fluorine contains partial hydrolysis condensation products of perfluorosilanes substituted with at least one of haloalkyl, alkyl, alkoxy, or ester groups, and one or more partial hydrolysis condensation products of long-chain compounds with perfluoropolyether groups.

To facilitate the understanding below, the compounds are artificially named differently. The organic fluorine contains a first compound and a second compound. The first compound is a perfluorosilane substituted with at least one of haloalkyl, alkyl, alkoxy and ester groups. The second compound is a long-chain compound with perfluoropolyether group. Therefore, it may be understood that the organic fluorine contains one or more of the first compound and the second compound, or contains one or more of partial hydrolysis condensation products of the first compound and the second compound. Optionally, the first compound includes, but is not limited to, perfluoroalkyl ethyl trimethoxy silane, perfluoroalkyl ethyl triethoxy silane, perfluoroalkyl ethyl trichloro silane, perfluoroalkyl ethyl triacetoxy silane, perfluoroalkyl ethyl dichloro(methyl) silane, perfluorooctyl ethyl trichloro silane, perfluorodecyl trichloro silane, and perfluorodecyl trimethoxy silane. A total mass percentage of the first compound and the second compound is 0.1% ~ 10%. A mass ratio of the first compound to the second compound is 5:98 ~ 95:5. Acid catalysts for the first compound and the second compound include, but are not limited to, hydrochloric acid, sulfuric acid, nitric acid, acetic acid, tartaric acid, citric acid, sulfonic acid, and the like, so as to totally or partially hydrolyze the hydrolytic groups of the first compound and the second compound.

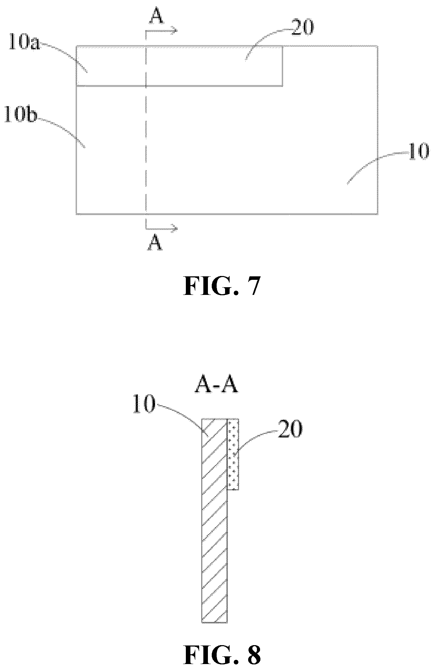

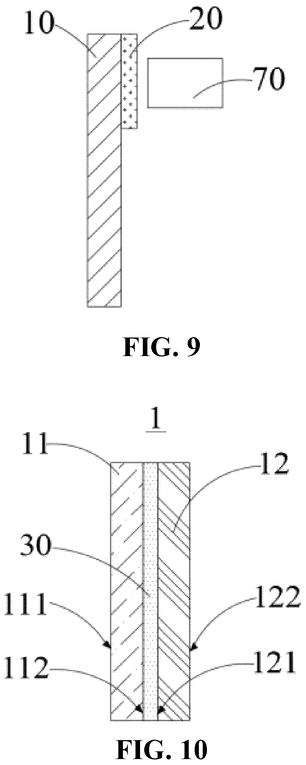

Referring to FIGS. 7 to 9, FIG. 7 is a front view of the glass 10 according to another embodiment of the disclosure, FIG. 8 is a schematic cross-sectional view of FIG. 7 according to another embodiment of the disclosure, taken along line A-A, and FIG. 9 is a side view of the glass 10 according to another embodiment of the disclosure. In the embodiment, the glass 10 has a first region 10a and a second region 10b connected to the first region 10a. An orthographic projection of the infrared anti-reflective coating 20 on the glass 10 falls within the first region 10a.

As illustrated in FIG. 7, the glass 10 further includes the first region 10a and the second region 10b connected to the first region 10a, and the shape and structure of the first region 10a and the second region 10b are not limited in the disclosure. In actual production, the first region 10a and the second region 10b are integrally formed. However, for the convenience of understanding hereinafter, the glass 10 is artificially divided into the first region 10a and the second region 10b. It may also be understood that, the first region 10a and the second region 10b are provided for distinguishing of the position of the infrared anti-reflective coating 20 on the glass 10. As illustrated in FIG. 7, an orthographic projection of the infrared anti-reflective coating 20 on the glass 10 falls within the first region 10a, which may also be understood as that the infrared anti-reflective coating 20 is disposed on a surface of at least part of the glass 10. As illustrated in FIG. 9, the first region 10a may be positioned corresponding to a component requiring a high infrared transmittance, that is, may be set corresponding to a component (for example, a sensor) that has a high requirement for infrared transmittance. In the disclosure, the sensor is a light detection and ranging (LiDAR) 70. Therefore, in this case, the orthographic projection of the infrared anti-reflective coating 20 on the glass 10 falls within the first region 10a, which may be understood as the infrared anti-reflective coating 20 being disposed corresponding to a component requiring a high infrared transmittance, thereby not only meeting the requirement for high infrared transmittance of the glass 10 in practical use, but also saving materials and reducing production costs.

Referring to FIG. 10, FIG. 10 is a side view of a glass assembly according to an embodiment of the disclosure. Besides the glass 10 provided above, the disclosure also provides a glass assembly 1. The glass assembly 1 includes two glasses 10 provided in the disclosure (i.e., a first glass 11 and a second glass 12) and a thermoplastic interlayer 30 sandwiched between the two glasses 10.

The glass assembly 1 includes two glasses 10, i.e., the glass assembly 1 includes the first glass 11 and the second glass 12. The first glass 11 has a first surface 111 and a second surface 112 opposite the first surface 111. The second glass 12 has a third surface 121 and a fourth surface 122 opposite the third surface 121. The thermoplastic interlayer 30 is adjacent to both the second surface 112 and the third surface 121.

The glass 10 has been described in detail above, and will not be described again in the disclosure. The glass assembly 1 further includes the thermoplastic interlayer 30. The thermoplastic interlayer 30 may be customized according to the requirements of customers, so that the glass assembly 1 has other functions, and thus the glass assembly 1 may be applied to various fields. For example, the thermoplastic interlayer 30 may be used for sound insulation, heat insulation, absorption of a specific range of light, and the like. A shape of the thermoplastic interlayer 30 is not limited in the disclosure. A material of the thermoplastic interlayer 30 includes, but is not limited to, polyvinyl butyral (PVB), ethylene-vinyl acetate copolymer (EVA), polyurethane (PU), polyolefin elastomer (POE), and the like. Alternatively, in the case where the glass assembly 1 of the embodiment is applied to a vehicle, the thermoplastic interlayer 30 and the like, which has adhesive properties, can be utilized, so that the thermoplastic interlayer 30 can be connected to the first glass 11 and the second glass 12 to form the glass assembly 1. When the glass assembly 1 is subject to external impacts, since the thermoplastic interlayer 30 is connected to both the two glasses 10, at least part of the glass 10 that is broken by the impact will remain attached in the glass assembly 1, that is, at least part of the glass 10 that is broken by the impact will not fall off, thereby reducing the likelihood of injury to the user from the broken glass 10, and improving the safety of the vehicle. In addition, the thermoplastic interlayer 30 may be capable of absorbing ultraviolet light, so that a transmittance of the glass assembly 1 for light of 250 nm ~ 400 nm is less than or equal to 2%, i.e., T₍₂₅₀₋₄₀₀₎ ≤ 2%. Thus, the glass assembly 1 can absorb ultraviolet light, thereby improving the comfort of the vehicle. Further, optionally, since polyvinyl butyral has adhesive property and good penetration resistance, and also has a sound insulating function, polyvinyl butyral may be selected as the material of the thermoplastic interlayer.

Referring to FIG. 10, the glass assembly 1 may have an increased infrared transmittance with the aid of the glass 10 (i.e., the first glass 11 and the second glass 12) provided in the disclosure. Furthermore, the thermoplastic interlayer 30 is added between the first glass 11 and the second glass 12. The thermoplastic interlayer 30 may be customized according to the requirements of customers, so that the glass assembly 1 has other functions, and thus the glass assembly 1 can be applied to various fields. Therefore, the glass assembly 1 may also have other functions required by users while having high infrared transmittance, thereby improving the practicability of the glass assembly 1.

In one embodiment, the glass assembly 1 has a transmittance of greater than or equal to 90% for infrared light with a wavelength ranging from 800 nm to 1580 nm. The glass assembly 1 in the embodiment uses the glass 10 provided in the disclosure, and by controlling the content of total iron expressed as Fe₂O₃ and adding ZnO of a specific content, TiO₂ of a specific content, and Sb₂Oₓ of a specific content, the glass 10 can be adjusted, ZnO, TiO₂, Sb₂Oₓ, and total iron expressed as Fe₂O₃ may cooperate with each other to improve the infrared transmittance of the glass 10, thereby enabling the glass assembly 1 to have a transmittance greater than or equal to 90% for infrared light with a wavelength of 800 nm ~ 1580 nm.

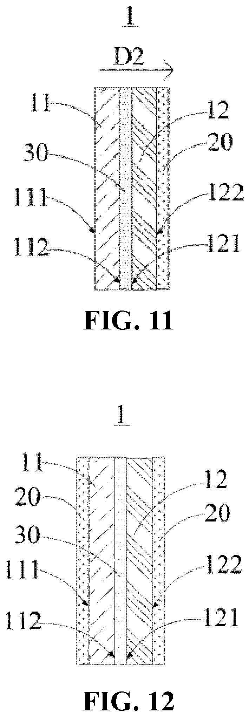

Referring to FIG. 11 and FIG. 12, FIG. 11 is a side view of the glass assembly according to another embodiment of the disclosure, and FIG. 12 is a side view of the glass assembly according to another embodiment of the disclosure. In the embodiment, an infrared anti-reflective coating 20 is provided at one side, away from the thermoplastic interlayer 30, of at least one of the two glasses 10.

The infrared anti-reflective coating 20 has been described in detail above, and will not be described herein again. The glass assembly 1 provided with the infrared anti-reflective coating 20 has a transmittance of greater than or equal to 94% for infrared light with a wavelength ranging from 800 nm to 1580 nm. As illustrated in FIG. 11 and FIG. 12, the infrared anti-reflective coating 20 may be disposed on the first surface 111 and/or the fourth surface 122. Alternatively, in the case where the glass assembly 1 of the embodiment is applied to a vehicle, the first glass 11 is closer to the exterior than the second glass 12. The infrared anti-reflective coating 20 may be disposed on the fourth surface 122. That is, the infrared anti-reflective coating 20 may be disposed on one side of the second glass 12 close to the interior of the vehicle, so that not only the light transmittance of the glass 10 can be improved, but also the infrared anti-reflective coating 20 can be protected from external impacts, thereby prolonging the service life of the infrared anti-reflective coating 20. Further, optionally, the fourth surface 122 has the first region 10a, and the first region 10a is close to a component (such as a sensor) requiring a high infrared transmittance, and therefore, the infrared anti-reflective coating 20 is disposed in the first region 10a, thereby not only meeting the requirement for high infrared transmittance of the glass assembly 1 in practical use, but also saving materials and reducing production costs.

As illustrated in FIG. 11, when light is irradiated towards the glass assembly 1 (i.e., in direction D2 illustrated in FIG. 11), the light will first pass through the glass assembly 1 (i.e., sequentially pass through the first glass 11, the thermoplastic interlayer, and the second glass 12), and then pass through the infrared anti-reflective coating 20 disposed at one side of the glass assembly 1. Since the infrared anti-reflective coating 20 satisfies the structural design requirements of infrared anti-reflection, the infrared transmittance can be improved. The infrared anti-reflective coating 20 may also be regarded as a component for improving infrared transmittance. Therefore, the infrared anti-reflective coating 20 may be added to further improve the infrared transmittance of the glass assembly 1.

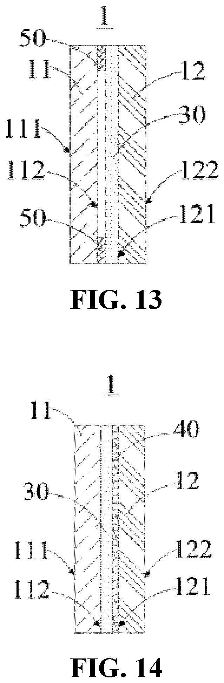

Alternatively, referring to FIG. 13, FIG. 13 is a side view of a glass assembly according to another embodiment of the disclosure. An ink coating 50 is provided on one side of the glass 10. The ink coating 50 is disposed on one side of at least one glass 10. The ink coating 50 may be disposed on the second surface 112 and/or the fourth surface 122 by printing ink, thereby improving the decorative performance of the glass assembly 1.

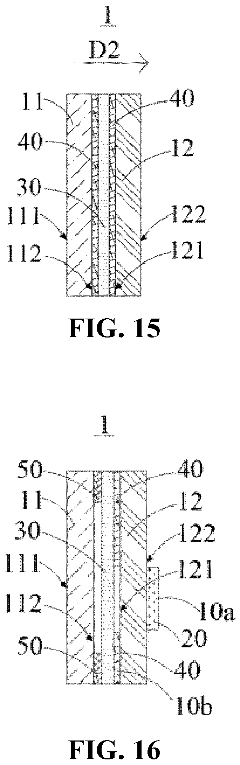

Referring to FIGS. 14 to 16, FIG. 14 is a partial side view of the glass assembly 1 according to another embodiment of the disclosure, FIG. 15 is a partial side view of the glass assembly 1 according to another embodiment of the disclosure, and FIG. 16 is a side view of the glass assembly 1 according to another embodiment of the disclosure.

In the embodiment, the glass assembly 1 further includes a thermal insulation coating 40. The thermal insulation coating 40 is provided on one side, close to the thermoplastic interlayer 30, of at least one of the two glasses 10. The thermal insulation coating 40 is located outside a position of the glass 10 where an orthographic projection of the infrared anti-reflective coating 20 falls.

The glass assembly 1 further includes the thermal insulation coating 40. The thermal insulation coating 40 may be used for improving the heat insulation performance of the glass assembly 1. As illustrated in FIG. 14 and FIG. 15, the thermal insulation coating 40 is disposed on one side, close to the thermoplastic interlayer 30, of the at least one of the two glasses 10. That is, the thermal insulation coating 40 may be disposed on the second surface 112 and/or the third surface 121. The shape and structure of the thermal insulation coating 40 are not limited in the disclosure, as long as it may be used to improve the heat insulation performance of the glass assembly 1. Optionally, the material of the thermal insulation coating 40 may be, but not limited to, a functional silver coating of single-layer, dual-layer, triple-layer, or silver alloy.

Furthermore, by setting the thermal insulation coating 40 to be outside of a position of the glass 10 where the orthographic projection of the infrared anti-reflective coating 20 falls, mutual influence between the thermal insulation coating 40 and the infrared anti-reflective coating 20 may be avoided, thereby not only making the glass assembly 1 have a heat insulation effect, but also ensuring that the infrared anti-reflective coating 20 may improve infrared transmittance of the glass assembly 1.

In one embodiment, as illustrated in FIG. 15, in the case where the glass assembly 1 includes the thermal insulation coating 40 but does not include the infrared anti-reflective coating 20, when light irradiates towards the glass 10 (i.e., in direction D2 illustrated in FIG. 15), the light passes through the first glass 11, the thermal insulation coating 40, the thermoplastic interlayer 30, the thermal insulation coating 40, and the second glass 12 in sequence. Since the thermal insulation coating 40 is capable of reflecting infrared light, the thermal insulation coating 40 may also be regarded as a component for reducing heat. Therefore, by further providing the thermal insulation coating 40, the glass assembly 1 not only has a high infrared transmittance, but also has a heat insulation effect.

It may be noted that, FIG. 14 and FIG. 5 in the embodiments are each a partial side view of the glass assembly 1, where there is no LiDAR 70 disposed at one side of the glass assembly 1. However, in an embodiment, the LiDAR 70 is disposed at one side of the glass assembly 1, and the thermal insulation coating 40 is located outside a position of the glass assembly 1 where an orthographic projection of the LiDAR 70 falls. Therefore, by arranging the thermal insulation coating 40 to be outside a position of the glass assembly 1 where the orthographic projection of the LiDAR 70 falls, the glass assembly 1 not only has a heat insulation effect, but also prevents the thermal insulation coating 40 from affecting the reception of external signals by the LiDAR 70.

Optionally, the thermal insulation coating 40 includes a dielectric layer, an infrared reflecting layer, a barrier layer, and a sub-protective coating. The dielectric layer may be a multi-layer coating. A material of the dielectric layer includes, but is not limited to, Si₃N₄, metal oxides containing zinc and tin (for example, ZnSnOₓ, ZnSnMgOₓ, ZnSnNiOₓ, etc.), metals including at least one or more of Zn, Sn, Mg, Ti, Ta, Nb, Bi, Zr, Si, Al, etc., and oxides thereof, and metals including at least one or more of Si, Al, Ti, Ta, Zr, Nb, etc., nitrides thereof, oxynitrides thereof, etc. A material of the infrared reflecting layer includes, but is not limited to silver, gold, aluminium, copper, alloys including at least one or more of silver, gold, aluminium, and copper, etc. A material of the infrared reflecting layer may reflect infrared energy. A material of the barrier layer may be metals including at least one or more of Ti, Ni, Cr, Al, Zr, Zn, Nb, Ta, etc., alloys thereof, oxides thereof, nitrides thereof, oxynitrides thereof, incomplete oxides thereof, incomplete nitrides thereof, incomplete oxynitrides thereof, etc. A material of the sub-protective layer includes, but is not limited to, SiOₓ, SiNₓ, SiOₓN_{y}, SiAlOₓ, SiAlOₓN_{y}, SiAlN_{y}, ZrOₓ, ZrMOₓ, and the like.

In another embodiment, as illustrated in FIG. 16, in the case where the glass assembly 1 includes the thermal insulation coating 40 and the infrared anti-reflective coating 20. The thermal insulation coating 40 and the infrared anti-reflective coating 20 are disposed on two opposite sides of the second glass 12, respectively. The glass 10 has the first region 10a and the second region 10b connected to the first region 10a. The orthographic projection of the infrared anti-reflective coating 20 on the glass 10 falls within the first region 10a and does not overlap with orthographic projections of the thermal insulation coating 40 and the ink coating 50 on the glass 10.

The thermal insulation coating 40, the infrared anti-reflective coating 20, the first region 10a, and the second region 10b have been described in detail above, and will not be repeated herein. The thermal insulation coating 40 and the infrared anti-reflective coating 20 are disposed on two opposite sides of the second glass 12. Alternatively, the thermal insulation coating 40 and the ink coating 50 may be disposed on the second surface 112 or/and the third surface 121. Alternatively, the infrared anti-reflective coating 20 may be disposed on the first surface 111 or/and the fourth surface 122. In addition, the orthographic projection of the infrared anti-reflective coating 20 on the glass 10 falls within the first region 10a, and does not overlap with orthographic projections of the thermal insulation coating 40 and the ink coating 50 on the glass 10, that is, the orthographic projection of the infrared anti-reflective coating 20 on the glass 10, the orthographic projection of the thermal insulation coating 40 on the glass 10, and the orthographic projection of the ink coating 50 on the glass 10 do not overlap with each other.

Optionally, the infrared anti-reflective coating 20, the thermal insulation coating 40, and the ink coating 50 may be disposed on at least part of the surface of the glass 10 by using methods such as masking or laser. Alternatively, the infrared anti-reflective coating 20, the thermal insulation coating 40, and the ink coating 50 may not cover an entire surface of the glass 10 at one side by removing films. Further, optionally, an area of a surface of the thermal insulation coating 40 is no less than an area of a surface of the infrared anti-reflective coating 20, and the area of the surface of the infrared anti-reflective coating 20 is less than or equal to 10% of the area of the surface of the thermal insulation coating 40.

In an embodiment, a thickness of the infrared anti-reflective coating is greater than a thickness of the thermal insulation coating. That is, in a thickness direction of the glass, the thickness of the thermal insulation coating 40 is less than the thickness of the infrared anti-reflective coating 20.

The thermal insulation coating 40 and the infrared anti-reflective coating 20 have been described in detail above, and will not be repeated herein. In the case where the thickness of the thermal insulation coating 40 is less than the thickness of the infrared anti-reflective coating 20, more space may be provided for arranging the infrared anti-reflective coating 20. For example, by adjusting the thickness, the number of layers, the refractive index, etc. of the infrared anti-reflective coating 20, the infrared transmittance of the infrared anti-reflective coating 20 can be further improved. As such, the glass assembly 1 not only has a heat insulation effect, but also has a further improved infrared transmittance.

As illustrated in FIG. 16, in the case where the thermal insulation coating 40 and the infrared anti-reflective coating 20 are further provided, the orthographic projection of the infrared anti-reflective coating 20 on the glass 10 falls within the first region 10a, and does not overlap with the orthographic projection of the thermal insulation coating 40 on the glass 10. That is, the orthographic projection of the infrared anti-reflective coating 20 on the glass 10 does not overlap with the orthographic projection of the thermal insulation coating 40 on the glass 10, so that the thermal insulation coating 40 can be prevented from shielding infrared light, and a reduction in the enhancement effect of the infrared anti-reflective coating 20 on the infrared transmittance can be avoided, thereby ensuring a heat insulation effect of the glass assembly 1, and further improving the infrared transmittance of the glass assembly 1.

The disclosure further provides a vehicle. The vehicle includes a vehicle body, the LiDAR 70, and the glass assembly 1 provided in the disclosure. The vehicle body and the glass assembly 1 cooperatively define an interior space, and the LiDAR 70 is mounted in the interior space. The LiDAR 70 is configured to emit a signal that is to pass through the glass assembly 1 and/or receive a signal that has passed through the glass assembly 1. The two glasses 10 include the first glass 11 and the second glass 12. The second glass 12 is closer to the interior space than the first glass 11. In a direction in which the glass 10 and the thermoplastic interlayer 30 are arranged, a thickness of the first glass 11 is greater than or equal to a thickness of the second glass 12.

The glass assembly 1 has been described in detail above, and will not be described in detail in the disclosure. The vehicle further includes the LiDAR 70. The LiDAR 70 is configured to transmit and/or receive a signal. Furthermore, the shape of the LiDAR 70 is not limited in the disclosure. Optionally, signals received by the LiDAR 70 include, but are not limited to, infrared light, ultraviolet light, and the like. In addition, the shape of the vehicle body is not limited in the disclosure, as long as the vehicle body and the glass assembly 1 can cooperatively define the interior space. In the direction in which the glass 10 and the thermoplastic interlayer 30 are arranged, the thickness of the first glass 11 is greater than or equal to the thickness of the second glass 12. It may also be understood as that the thickness of the first glass 11 is greater than or equal to the thickness of the second glass 12. Alternatively, the thickness of the first glass sheet 11 is greater than or equal to 2.5 times the thickness of the second glass sheet 12. Optionally, the first glass 11 and the second glass 12 may be planar, curved, or the like. Further, optionally, in the case where the thickness of the first glass 11 is greater than or equal to 1.5 times the thickness of the second glass 12, the second glass 12 may be processed by a chemical tempering process. Further, optionally, during design of the glass assembly 1, while complying with the above requirements, it is possible to consider reducing the thickness of the glass assembly 1 in a direction perpendicular to the vehicle body, thereby lightening the weight of the glass assembly 1, reducing production costs, and meeting the requirements for vehicle lightweighting as much as possible.

In the vehicle provided in the embodiment, with the aid of the glass assembly 1 provided in the disclosure, a high infrared transmittance of the glass assembly 1 may be achieved, thereby improving a transmittance for infrared light transmitted from the exterior of the vehicle to the interior of the vehicle. In addition, the second glass 12 being closer to the interior space than the first glass 11 may be understood as the first glass 11 facing the exterior of the vehicle and the second glass 12 facing the interior of the vehicle. That is, the first glass 11 faces the exterior of the vehicle, and the second glass 12 faces a cockpit. It can also be understood that the first glass 11 needs to withstand obstacles from the outside, hence requiring higher durability and impact resistance. Increasing the thickness can enhance the durability and impact resistance of the glass 11. Therefore, the thickness of the first glass 11 is greater than or equal to the thickness of the second glass 12. In other words, when the first glass 11 is subject to external impacts, the thicker glass (i.e., the first glass 11) may improve the durability and impact resistance of the glass against the external impacts, thereby improving the durability and impact resistance of the glass assembly 1 of the vehicle, and enhancing the safety of occupants inside the vehicle. Therefore, the glass assembly 1 of the vehicle may enhance the safety of the vehicle while having high infrared transmittance.

## Claims

1. A glass (10) having oxide components comprising, in a content expressed in percentages by total mass of the glass (10):
SiO₂ of 55% ~ 85%;
Al₂O₃ of 0% ~ 10%;
Na₂O of 5% ~ 20%;
CaO of 5% ~ 20%;
MgO of 0% ~ 10%;
K₂O of 0% ~ 10%;
BaO of 0% ~ 10%;
Sb₂Oₓ of 0.4% ~ 0.6%;
ZnO of 0.2% ~ 0.4%;
TiO₂ of 0.3 % ~ 0.4%; and
total iron expressed as Fe₂O₃ of less than 180 parts per million (ppm);
wherein ZnO + TiO₂ + Fe₂O₃ ≤ Sb₂Oₓ, and 10 Fe₂O₃ + ZnO + TiO₂ ≥ Sb₂Oₓ.

2. The glass (10) of claim 1, wherein
a mass of Sb₂Oₓ is less than or equal to three times a mass of ZnO; or
a mass of Sb₂Oₓ is less than or equal to twice a mass of TiO₂.

3. The glass (10) of claim 1, wherein the glass (10) satisfies at least one of:
a mass of Sb₂Oₓ is greater than twice a mass of ZnO; or
the mass of Sb₂Oₓ is greater than a mass of TiO₂.

4. The glass (10) of claim 1, wherein the glass (10) has a transmittance of greater than or equal to 91% for infrared light with a wavelength ranging from 800 nm to 1580 nm.

5. A glass assembly (1), comprising two glasses (10) of any one of claims 1 to 4 and a thermoplastic interlayer (30) sandwiched between the two glasses (10).

6. The glass assembly (1) of claim 5, wherein the glass assembly (1) has a transmittance of greater than or equal to 90% for infrared light with a wavelength ranging from 800 nm to 1580 nm.

7. The glass assembly (1) of claim 5, wherein
an infrared anti-reflective coating (20) is provided at one side, away from the thermoplastic interlayer (30), of at least one of the two glasses (10); or
one of the two glasses (10) further comprises at least one infrared anti-reflective coating (20) stacked on at least one side of the glass (10).

8. The glass assembly of claim 7, wherein a thermal insulation coating (40) is provided on one side, close to the thermoplastic interlayer (30), of at least one of the two glasses (10), and the thermal insulation coating (40) is located outside a position of the glass (10) where an orthographic projection of the infrared anti-reflective coating (20) falls.

9. The glass assembly of claim 8, wherein a thickness of the infrared anti-reflective coating (20) is greater than a thickness of the thermal insulation coating (40).

10. The glass assembly (1) of claim 7, wherein one of the two glasses (10) further comprises a protective coating (80) disposed on a side face of the infrared anti-reflective coating (20) away from the glass (10).

11. The glass assembly (1) of claim 10, wherein the protective coating (80) is an organic fluorine coating and has a thickness less than or equal to 10 nm and a refractive index of 1.39.

12. The glass assembly (1) of claim 7, wherein
the infrared anti-reflective coating (20) is implemented as a single-layer infrared anti-reflective coating and has a refractive index less than a refractive index of the glass (10); or
the infrared anti-reflective coating (20) is implemented as a single-layer infrared anti-reflective coating and has a refractive index less than a refractive index of the glass (10), the single-layer infrared anti-reflective coating has a refractive index of 1.3 ~ 1.8, and the single-layer infrared anti-reflective coating is made of at least one of aluminum oxide, silicon dioxide, silicon oxynitride, aluminum oxynitride, magnesium oxide, or alkaline earth metal fluorohalide.

13. The glass assembly (1) of claim 7, wherein the infrared anti-reflective coating (20) is implemented as a plurality of infrared anti-reflective coatings (20) stacked with each other, each of the plurality of infrared anti-reflective coatings (20) comprises a first infrared anti-reflective coating (201) close to the glass (10) and a second infrared anti-reflective coating (202) away from the glass (10), wherein in each two adjacent infrared anti-reflective coatings (20), the first infrared anti-reflective coating (201) of one of the two adjacent infrared anti-reflective coatings (20) is in direct contact with the second infrared anti-reflective coating (202) of the other of the two adjacent infrared anti-reflective coatings (20); and a refractive index of the first infrared anti-reflective coating (201) is greater than a refractive index of the second infrared anti-reflective coating (202).

14. The glass assembly (1) of claim 13, wherein
the first infrared anti-reflective coating (201) has a refractive index of 1.9 ~ 2.7 and the second infrared anti-reflective coating (202) has a refractive index of 1.3 ~ 1.8; and
the first infrared anti-reflective coating (201) is made of at least one of aluminum nitride, silicon nitride, titanium dioxide, zirconium dioxide, titanium nitride, niobium pentoxide, tantalum pentoxide, molybdenum oxide, or chromium oxide, and the second infrared anti-reflective coating (202) is made of at least one of aluminum oxide, silicon dioxide, silicon oxynitride, aluminum oxynitride, magnesium oxide, or alkaline earth metal fluorohalide.

15. A vehicle comprising a vehicle body, a light detection and ranging, LiDAR, (70), and the glass assembly (1) of any one of claims 6 to 14, wherein the vehicle body and the glass assembly (1) cooperatively define an interior space, and the LiDAR (70) is mounted in the interior space, the LiDAR (70) is configured to emit a signal that is to pass through the glass assembly (1) and/or receive a signal that has passed through the glass assembly (1); and the two glasses (10) comprise a first glass (11) and a second glass (12), wherein the second glass (12) is closer to the interior space than the first glass (11), and a thickness of the first glass (11) is greater than or equal to a thickness of the second glass (12).

## Patentansprüche

1. Glas (10), das Oxidkomponenten aufweist, umfassend, in einem in Prozent ausgedrückten Gehalt bezogen auf die Gesamtmasse des Glases (10):
SiO₂ von 55 % - 85 %;
Al₂O₃ von 0 % - 10 %;
Na₂O von 5 % - 20 %;
CaO von 5 % - 20 %;
MgO von 0 % - 10 %;
K₂O von 0 % - 10 %;
BaO von 0 % - 10 %;
Sb₂Oₓ von 0,4 % - 0,6 %;
ZnO von 0,2 % - 0,4 %;
TiO₂ von 0,3 % - 0,4 %; und
Gesamteisen, ausgedrückt als Fe₂O₃, von weniger als 180 Teilen pro Million (ppm);
wobei ZnO + TiO₂ + Fe₂O₃ ≤ Sb₂Oₓ und 10 Fe₂O₃ + ZnO + TiO₂ ≥ Sb₂Oₓ ist.

2. Glas (10) nach Anspruch 1, wobei
die Masse von Sb₂Oₓ kleiner oder gleich dreimal die Masse ZnO ist; oder
die Masse von Sb₂Oₓ kleiner oder gleich zweimal die Masse TiO₂ ist.

3. Glas (10) nach Anspruch 1, wobei das Glas (10) zumindest eines aus folgenden erfüllt:
die Masse von Sb₂Oₓ ist größer als zweimal die Masse von ZnO; oder
die Masse von Sb₂Oₓ ist größer als die Masse von TiO₂.

4. Glas (10) nach Anspruch 1, wobei das Glas (10) eine Durchlässigkeit von größer oder gleich 91 % für Infrarotlicht mit einer Wellenlänge im Bereich von 800 nm bis 1.580 nm aufweist.

5. Glasanordnung (1), umfassend zwei Gläser (10) nach einem der Ansprüche 1 bis 4 und eine wärmehärtende Zwischenschicht (30), die sandwichartig zwischen den zwei Gläsern (10) angeordnet ist.

6. Glasanordnung (1) nach Anspruch 5, wobei die Glasanordnung (1) eine Durchlässigkeit von größer oder gleich 90 % für Infrarotlicht mit einer Wellenlänge im Bereich von 800 nm bis 1.580 nm aufweist.

7. Glasanordnung (1) nach Anspruch 5, wobei
eine Infrarotantireflexionsbeschichtung (20) auf einer Seite von zumindest einem der zwei Gläser (10), von der wärmehärtenden Zwischenschicht (30) entfernt, bereitgestellt ist; oder
zumindest eines der zwei Gläser (10) ferner zumindest eine Infrarotantireflexionsbeschichtung (20) umfasst, die auf zumindest einer Seite des Glases (10) gestapelt ist.

8. Glasanordnung nach Anspruch 7, wobei eine Wärmeisolierbeschichtung (40) auf einer Seite von zumindest einem der zwei Gläser (10) nahe der wärmehärtenden Zwischenschicht (30) bereitgestellt ist und die Wärmeisolierbeschichtung (40) außerhalb einer Position des Glases (10) angeordnet ist, wo eine orthographische Projektion der Infrarotantireflexionsbeschichtung (20) hinfällt.

9. Glasanordnung nach Anspruch 8, wobei die Dicke der Infrarotantireflexionsbeschichtung (20) größer ist als die Dicke der Wärmeisolierbeschichtung (40).

10. Glasanordnung (1) nach Anspruch 7, wobei eines von den zwei Gläsern (10) ferner eine Schutzbeschichtung (80) umfasst, die auf einer Seitenfläche der Infrarotantireflexionsbeschichtung (20), von dem Glas (10) entfernt, angeordnet ist.

11. Glasanordnung (1) nach Anspruch 10, wobei die Schutzbeschichtung (80) eine organische Fluorbeschichtung ist und eine Dicke von kleiner oder gleich 10 nm und einen Brechungsindex von 1,39 aufweist.

12. Glasanordnung (1) nach Anspruch 7, wobei
die Infrarotantireflexionsbeschichtung (20) als einschichtige Infrarotantireflexionsbeschichtung umgesetzt ist und einen Brechungsindex aufweist, der geringer ist als der Brechungsindex des Glases (10); oder wobei
die Infrarotantireflexionsbeschichtung (20) als einschichtige Infrarotantireflexionsbeschichtung umgesetzt ist und einen Brechungsindex aufweist, der geringer als der Brechungsindex des Glases (10) ist, wobei die einschichtige Infrarotantireflexionsbeschichtung einen Brechungsindex von 1,3 - 1,8 aufweist und wobei die einschichtige Infrarotantireflexionsbeschichtung aus zumindest einem aus Aluminiumoxid, Siliciumdioxid, Siliciumoxynitrid, Aluminiumoxynitrid, Magnesiumoxid oder Erdalkalimetallfluorhalogenid besteht.

13. Glasanordnung (1) nach Anspruch 7, wobei die Infrarotantireflexionsbeschichtung (20) als Vielzahl von übereinandergestapelten Infrarotantireflexionsbeschichtungen (20), umgesetzt ist, wobei jede aus der Vielzahl von Infrarotantireflexionsbeschichtungen (20) eine erste Infrarotantireflexionsbeschichtung (201) nahe dem Glas (10) und eine zweite Infrarotantireflexionsbeschichtung (202) entfernt von dem Glas (10) umfasst, wobei von jeweils zwei benachbarten Infrarotantireflexionsbeschichtungen (20) die erste Infrarotantireflexionsbeschichtung (201) aus der einen aus den zwei benachbarten Infrarotantireflexionsbeschichtungen (20) in direktem Kontakt mit der zweiten Infrarotantireflexionsbeschichtung (202) der anderen aus den zwei benachbarten Infrarotantireflexionsbeschichtungen (20) ist; und wobei der Brechungsindex der ersten Infrarotantireflexionsbeschichtung (201) größer ist als der Brechungsindex der zweiten Infrarotantireflexionsbeschichtung (202).

14. Glasanordnung (1) nach Anspruch 13, wobei
die erste Infrarotantireflexionsbeschichtung (201) einen Brechungsindex von 1,9 - 2,7 und die zweite Infrarotantireflexionsbeschichtung (202) einen Brechungsindex von 1,3 - 1,8 aufweist; und wobei
die erste Infrarotantireflexionsbeschichtung (201) aus zumindest einem aus Aluminiumnitrid, Siliciumnitrid, Titandioxid, Zirkoniumdioxid, Titannitrid, Niobpentoxid, Tantalpentoxid, Molybdänoxid oder Chromoxid besteht und die zweite Infrarotantireflexionsbeschichtung (202) aus zumindest einem aus Aluminiumoxid, Siliciumdioxid, Siliciumoxynitrid, Aluminiumoxynitrid, Magnesiumoxid oder Erdalkalimetallfluorhalogenid besteht.

15. Fahrzeug, umfassend einen Fahrzeugkörper, eine Light-Detection-And-Ranging-(LiDAR-) Vorrichtung (70) und eine Glasanordnung (1) nach einem der Ansprüche 6 bis 14, wobei der Fahrzeugkörper und die Glasanordnung (1) zusammenwirkend einen Innenraum definieren und die LiDAR-Vorrichtung (70) im Innenraum montiert ist, wobei die LiDAR-Vorrichtung (70) dazu ausgelegt ist, ein Signal zu emittieren, das durch die Glasanordnung (1) hindurchzutreten hat, und/oder ein Signal zu empfangen, das durch die Glasanordnung (1) hindurchgetreten ist; und die zwei Gläser (10) ein erstes Glas (11) und ein zweites Glas (12) umfassen, wobei das zweite Glas (12) näher am Innenraum liegt als das erste Glas (11) und die Dicke des ersten Glases (11) größer oder gleich die Dicke des zweiten Glases (12) ist.

## Revendications

1. Verre (10) ayant des composants oxyde comprenant, en teneur exprimée en pourcentages de la masse totale du verre (10) :
SiO₂ de 55 % à 85 % ;
Al₂O₃ de 0 % à 10 % ;
Na₂O de 5 % à 20 % ;
CaO de 5 % à 20 % ;
MgO de 0 % à 10 % ;
K₂O de 0 % à 10 % ;
BaO de 0 % à 10 % ;
Sb₂Oₓ de 0,4 % à 0,6 % ;
ZnO de 0,2 % à 0,4 % ;
TiO₂ de 0,3 % à 0,4 % ; et
du fer total exprimé sous forme de Fe₂O₃ de moins de 180 parties par million (ppm) ;
dans lequel ZnO + TiO₂ + Fe₂O₃ ≤ Sb₂Oₓ, et 10 Fe₂O₃ + ZnO + TiO₂ ≥ Sb₂Oₓ.

2. Verre (10) selon la revendication 1, dans lequel
une masse de Sb₂Oₓ est inférieure ou égale à trois fois une masse de ZnO ; ou
une masse de Sb₂Oₓ est inférieure ou égale à deux fois une masse de TiO₂.

3. Verre (10) selon la revendication 1, dans lequel le verre (10) satisfait à au moins une condition parmi :
une masse de Sb₂Oₓ est supérieure à deux fois une masse de ZnO ; ou
la masse de Sb₂Oₓ est supérieure à une masse de TiO₂.

4. Verre (10) selon la revendication 1, dans lequel le verre (10) a une transmittance supérieure ou égale à 91 % pour la lumière infrarouge avec une longueur d'onde allant de 800 nm à 1 580 nm.

5. Ensemble de verres (1), comprenant deux verres (10) selon l'une quelconque des revendications 1 à 4 et une couche intercalaire thermoplastique (30) enserrée entre les deux verres (10).

6. Ensemble de verres (1) selon la revendication 5, dans lequel l'ensemble de verres (1) a une transmittance supérieure ou égale à 90 % pour la lumière infrarouge avec une longueur d'onde allant de 800 nm à 1 580 nm.

7. Ensemble de verres (1) selon la revendication 5, dans lequel
un revêtement antireflet infrarouge (20) est disposé sur un côté, éloigné de la couche intercalaire thermoplastique (30), d'au moins un des deux verres (10) ; ou
l'un des deux verres (10) comprend en outre au moins un revêtement antireflet infrarouge (20) empilé sur au moins un côté du verre (10).

8. Ensemble de verres selon la revendication 7, dans lequel un revêtement d'isolation thermique (40) est disposé sur un côté, proche de la couche intercalaire thermoplastique (30), d'au moins un des deux verres (10), et le revêtement d'isolation thermique (40) est situé en dehors d'une position du verre (10) où retombe une projection orthographique du revêtement antireflet infrarouge (20).

9. Ensemble de verres selon la revendication 8, dans lequel une épaisseur du revêtement antireflet infrarouge (20) est supérieure à une épaisseur du revêtement d'isolation thermique (40).

10. Ensemble de verres (1) selon la revendication 7, dans lequel l'un des deux verres (10) comprend en outre un revêtement de protection (80) disposé sur une face latérale du revêtement antireflet infrarouge (20) éloignée du verre (10).

11. Ensemble de verres (1) selon la revendication 10, dans lequel le revêtement de protection (80) est un revêtement organique à base de fluor et a une épaisseur inférieure ou égale à 10 nm et un indice de réfraction de 1,39.

12. Ensemble de verres (1) selon la revendication 7, dans lequel
le revêtement antireflet infrarouge (20) est mis en œuvre comme un revêtement antireflet infrarouge monocouche et a un indice de réfraction inférieur à un indice de réfraction du verre (10) ; ou
le revêtement antireflet infrarouge (20) est mis en œuvre comme un revêtement antireflet infrarouge monocouche et a un indice de réfraction inférieur à un indice de réfraction du verre (10), le revêtement antireflet infrarouge monocouche a un indice de réfraction de 1,3 à 1,8, et le revêtement antireflet infrarouge monocouche est constitué d'au moins un parmi de l'oxyde d'aluminium, dioxyde de silicium, oxynitrure de silicium, oxynitrure d'aluminium, oxyde de magnésium, ou fluorohalogénure de métal alcalino-terreux.

13. Ensemble de verres (1) selon la revendication 7, dans lequel le revêtement antireflet infrarouge (20) est mis en œuvre comme une pluralité de revêtements antireflet infrarouge (20) empilés les uns sur les autres, chacun de la pluralité de revêtements antireflet infrarouge (20) comprend un premier revêtement antireflet infrarouge (201) proche du verre (10) et un second revêtement antireflet infrarouge (202) éloigné du verre (10), dans lequel dans chacun de deux revêtements antireflet infrarouge (20) adjacents, le premier revêtement antireflet infrarouge (201) de l'un des deux revêtements antireflet infrarouge (20) adjacents est en contact direct avec le second revêtement antireflet infrarouge (202) de l'autre des deux revêtements antireflet infrarouge (20) adjacents ; et un indice de réfraction du premier revêtement antireflet infrarouge (201) est supérieur à un indice de réfraction du second revêtement antireflet infrarouge (202).

14. Ensemble de verres (1) selon la revendication 13, dans lequel
le premier revêtement antireflet infrarouge (201) a une indice de réfraction de 1,9 à 2,7 et le second revêtement antireflet infrarouge (202) a un indice de réfraction de 1,3 à 1,8 ; et
le premier revêtement antireflet infrarouge (201) est constitué d'au moins un parmi du nitrure d'aluminium, nitrure de silicium, dioxyde de titane, dioxyde de zirconium, nitrure de titane, pentoxyde de niobium, pentoxyde de tantale, oxyde de molybdène, ou oxyde de chrome, et le second revêtement antireflet infrarouge (202) est constitué d'au moins un parmi de l'oxyde d'aluminium, dioxyde de silicium, oxynitrure de silicium, oxynitrure d'aluminium, oxyde de magnésium, ou fluorohalogénure de métal alcalino-terreux.

15. Véhicule comprenant une carrosserie de véhicule, un dispositif de détection et télémétrie par la lumière, LiDAR, (70), et l'ensemble de verres (1) selon l'une quelconque des revendications 6 à 14, dans lequel la carrosserie de véhicule et l'ensemble de verres (1) définissent conjointement un espace intérieur, et le LiDAR (70) est monté dans l'espace intérieur, le LiDAR (70) étant configuré pour émettre un signal qui doit traverser l'ensemble de verres (1) et/ou recevoir un signal ayant traversé l'ensemble de verres (1) ; et les deux verres (10) comprennent un premier verre (11) et un second verre (12), dans lequel le second verre (12) est plus proche de l'espace intérieur que le premier verre (11), et une épaisseur du premier verre (11) est supérieure ou égale à une épaisseur du second verre (12).
